# EUROPEAN PATENT SPECIFICATION

(11) **EP 1 771 855 B1**
(45) Date of publication and mention of the grant of the patent: **19.12.2007**
(21) Application number: 05766795.8
(22) Date of filing: 15.07.2005
(51) Int. Cl.: G11B 20/12, G11B 20/10, G11B 27/10

(54) **METHOD FOR BUFFERING AUDIO DATA IN OPTICAL DISC SYSTEMS IN CASE OF MECHANICAL SHOCKS OR VIBRATIONS**
VERFAHREN ZUR PUFFERUNG VON AUDIODATEN BEI OPTISCHEN PLATTENSYSTEMEN IM FALLE MECHANISCHER ERSCHÜTTERUNGEN ODER VIBRATIONEN
PROCEDE DE MISE EN MEMOIRE TAMPON DE DONNEES AUDIO DANS DES SYSTEMES DE DISQUE OPTIQUE EN CAS DE CHOCS OU DE VIBRATIONS MECANIQUES

(30) Priority: 30.07.2004 EP 04018062
(43) Date of publication of application: 11.04.2007
(73) Proprietor: Thomson Licensing, 92100 Boulogne-Billancourt (FR)
(72) Inventor: PETER, Dietmar, 78669 Wellendingen (DE); BÄUMLE, Jürgen, 79790 Kuessaberg-Rheinheim (DE); HÖLZEMANN, Herbert, 78048 Villingen-Schwenningen (DE)
(74) Representative: Schmidt-Uhlig, Thomas
(86) International application number: PCT/EP2005/053406
(87) International publication number: WO 2006/010714

(56) References cited:
- EP-A- 0 717 407
- US-A- 5 970 031
- US-A- 5 995 460
- US-A- 5 995 462
- US-B1- 6 249 492

## Description

The present invention relates to a method for buffering audio data in systems for optical recording media, and to an apparatus for reading from and/or writing to optical recording media using such method.

Nowadays many apparatuses for reading from and/or writing to optical recording media are capable of handling compressed audio data, e.g. MP3-files. Usually the audio data are compressed by a factor of 4 to 12, for example. This means that if the data are read from the optical recording medium with a speed of 1x, i.e. with the speed necessary for reading uncompressed audio data, the recovered data arrive too fast for the decoder. However, in case of a recording medium operated at constant linear velocity the servo controller can usually only slow down the rotation speed to 0.6x. Therefore, the incoming compressed data have to be buffered in a memory before being conveyed to the decoder, and the decoder retrieves the data from the memory as they are needed. The buffer memory usually is an SDRAM.

The scenario is similar in the case of a shock proof apparatus, where a memory is filled with data earlier and faster than the memory is read out in order to cope with interruptions caused by a shock. In this case data corrupted by the shock are overwritten with correct data.

EP717407 discloses a shock resistant apparatus for playback of Compact Disks. A control unit stores the address of a write pointer indicating the first address of the last valid subcode information within a buffer. In the case of an interruption the write pointer is used as a reference both for the location of the interruption on the information medium and for the last valid data in the buffer and the writing to the buffer. For achieving the synchronization of the data stream in the buffer the synchronization bytes (S0, S1) included in the subcode information are used.

However, on optical recording media with very poor quality the marker signal may be corrupted. Either no marker signal is present at the specified position, or there are additional incorrect marker signals between two valid marker signals.

It is an object of the invention to propose a reliable method for buffering the audio data in an apparatus for reading from and/or writing to optical recording media.

According to the invention, this object is achieved by a method for buffering audio data read from an optical recording medium in a memory, the audio data being divided into frames with a determined number of audio samples, wherein in case of an error condition audio data from a previous position on the optical recording medium prior to a position corresponding to a determined verified write position in the memory are read and writing to the memory is inhibited, including the steps of:
- counting the number of audio samples read from the optical recording medium;
- searching for two subsequent markers having a distance equal to the number of audio samples of a frame;
- once the subsequent markers are found, determining the remaining distance to the verified write position based on the number of counted audio samples;
- restarting the writing of audio data to the memory when the audio data read from the optical recording medium correspond to the verified write position.
When the markers have a fixed position within the frames searching for two subsequent markers having a distance equal to the number of audio samples of a frame ensures that no corrupted markers are used for determining the remaining distance to the verified write position. When the subsequent markers are found the counted audio samples are preferably used for searching for the audio data corresponding to the verified write position.

An error condition in which the method is advantageously used is an overflow or an impending overflow of the memory or an interruption caused by a shock. In the first case more audio data than actually needed by the decoder have already been read. It is then necessary to wait until the decoder has requested further audio data from the memory, so that memory space becomes available again. In the second case the memory contains a certain amount of incorrect audio data, which needs to be replaced by correct audio data. In the event of a further interruption before reaching the verified write position audio data are preferably read from a further previous position on the optical recording medium.

Preferably, the marker is a synchronisation bit of a subcode frame. Such a synchronisation bit can easily be detected within the data read from the optical recording medium. The distance to the verified write position is advantageously determined in number of subcode frames. In this case a counter (Nsc) is provided for counting down the number of subcode frames remaining to the verified write position. However, it is likewise possible to determine the distance to the verified write position in number of audio samples etc.

Counting the number of audio samples read from the optical recording medium is preferably started by a signal indicating the start of a new frame. This ensures that at the end of a frame the number of counted audio samples equals the number of audio samples of a frame.

Preferably, an error status is indicated if a read counter of the memory reaches the verified write position. In this situation the apparatus has not yet recovered from the error condition, which means that no further verified audio data is available in the memory.

Favourably, a method according to the invention is used in an apparatus for reading from and/or writing to optical recording media.

For a better understanding of the invention, exemplary embodiments are specified in the following description with reference to the figures. It is understood that the invention is not limited to these exemplary embodiments and that specified features can also expediently be combined and/or modified without departing from the scope of the present invention. In the figures:
- Fig. 1: illustrates the audio data path of an apparatus for reading from and/or writing to optical recording media;
- Fig. 2: schematically shows the storage of new audio samples in a memory;
- Fig. 3: depicts the memory situation immediately after a shock;
- Fig. 4: shows the memory situation after a skip back of a pick-up;
- Fig. 5: depicts the initialisation of a subcode frame counter;
- Fig. 6: shows a first decrementation of the subcode frame counter after starting a new subcode frame;
- Fig. 7: shows a second decrementation of the subcode frame counter after starting a new subcode frame;
- Fig. 8: depicts the restart of the writing operation after arriving at a verified write pointer; and
- Fig. 9: explains the generation of the ESP_S1 signal by combining the S1 signal and the ADAT_STRT signal.

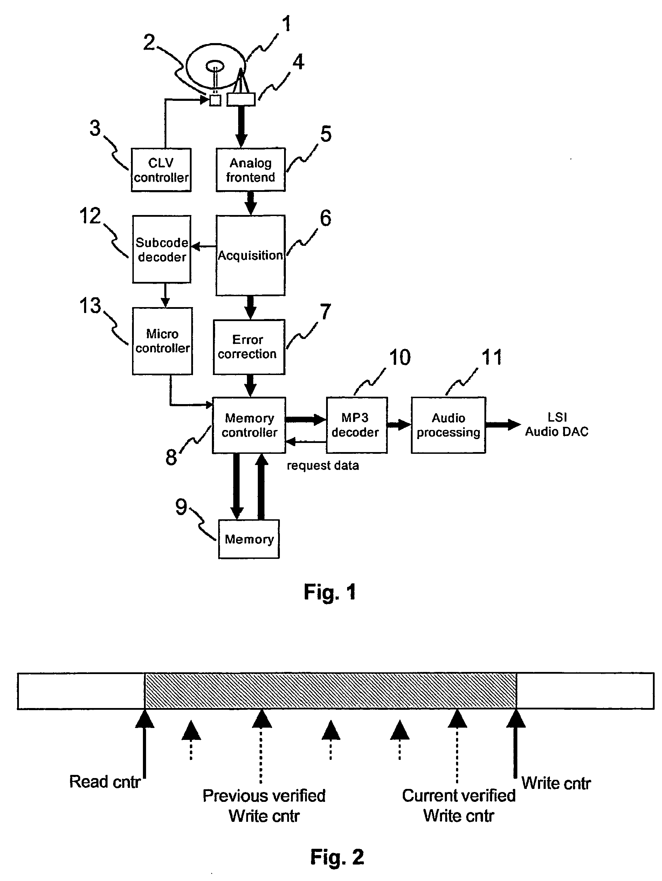

Fig. 1 shows the audio data path of an apparatus for reading from and/or writing to optical recording media 1. The apparatus is capable of handling compressed audio data. In the following reference is made to a Compact Disc (CD) as an example for such an optical recording medium and MP3 as a compression format. It is to be understood that the invention is not limited to neither this type of optical recording medium nor this compression format. In the figure audio data are indicated by thick arrows, while other data such as commands or requests are indicated by thin arrows.

Audio data are read from an optical recording medium 1 by an optical pickup 4. The recording medium 1 is rotated by a motor 2 with a constant linear velocity, e.g. 0.6x to 4x. The rotation is controlled by a CLV controller 3. The audio data read by the optical pickup 4 are received by an analog frontend 5 and transmitted to an acquisition block 6. An error correction block 7 performs error correction on the acquired audio data. The corrected audio data are then buffered in a memory 9 via a memory controller 8. When an MP3 decoder 10 requests the transmission of audio data, the memory controller 8 fetches the requested audio data from the memory 9 and transmits the data to the MP3 decoder. After decoding by the MP3 decoder 10, the audio data are sent to an audio processing block 11 and finally to a large scale integrated audio digital-to-analog converter (LSI Audio DAC, not shown).

The acquisition block 6 in addition sends subcode information to a subcode decoder 12, which in turn sends the decoded subcodes to a micro controller 13. The micro controller 13 is used for controlling the memory controller 8 in case of a shock or when the memory 9 is full.

Figs. 2-8 explain the organization of the memory and the principle of operation either in the case of a shock or when the memory is full.

In Fig. 2 the audio samples are stored in the memory 9 in the hashed area. At one end of the memory 9, a read counter (Read Cntr) is used for extracting the data from the memory 8 at a speed of exactly 1x (in case of playback of uncompressed audio data), or when requested by the MP3 decoder 10. The read counter is incremented each time a new sample is read out of the memory 9.

At the other end of the memory 9, a write counter (Write Cntr) is used for storing new incoming audio data into the memory 9. Each time a new sample arrives from the CD, it is stored at the location pointed to by the write counter. The write counter is then incremented by one position.

The CD is divided into subcode frames each 1176 (98x12) samples long. At the beginning of a new subcode frame, an S1 signal is asserted, from which the memory controller 8 can deduce which audio samples correspond to the beginning of the frame. These locations are indicated by the dashed arrows. From time to time, the micro controller 13 selects one of these locations as the position of a verified write counter (verified Write cntr). Preferably, the most recent known valid subcode frame starting position is selected for this purpose.

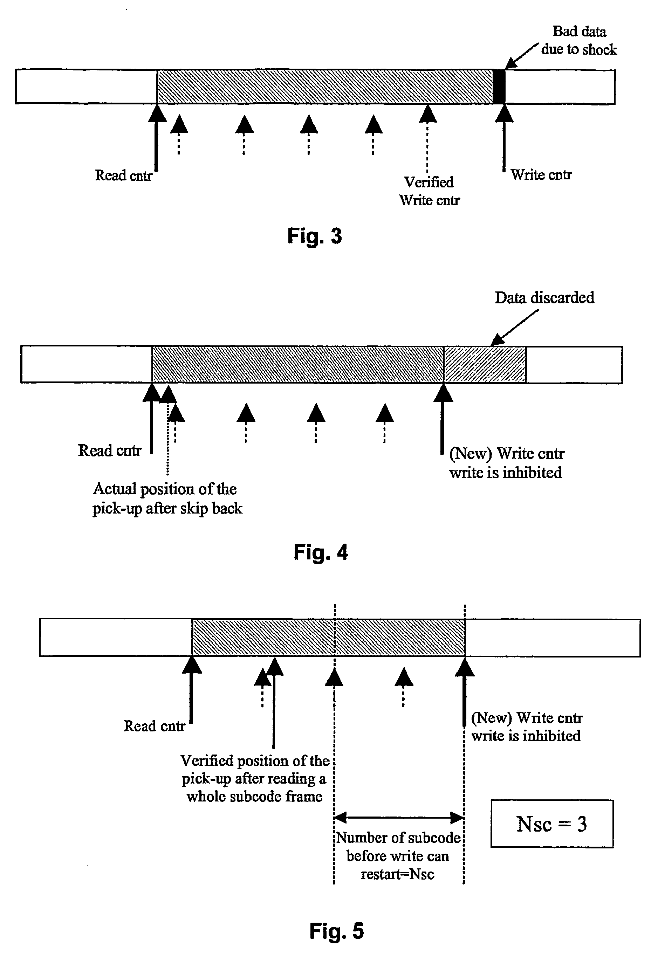

In Fig. 3 the read counter and the write counter have moved a bit further towards "the end" of the memory 9. It should be noted that the memory 9 behaves like a circular buffer, which means that the read counter and the write counter are allowed to wrap around. The figure depicts the situation immediately after a shock to the apparatus. In this case some bad data is stored in the memory 9, which is indicated by the black area.

The micro controller 13 reacts to the shock by stopping both reading from the CD and the writing to the memory 9. The micro controller 13 then initiates a "jump back" of the pickup 4 to a previous position on the CD. At the time of the jump back the position where the jump ends is unknown.

In Fig. 4 the jump back of the pickup 4 is finished and the micro controller 13 restarts reading of the CD. However, writing to the memory 9 remains inhibited, i.e. no new data are written to the memory. The memory controller 8 is in a "read enabled, write disabled" mode. At this instance neither the micro controller 13 nor the memory controller 8 know exactly at which position on the CD the pickup 4 is located, and to which location of the memory 9 the data read from the CD should be written. In the figure this is indicated by the dotted arrow pointing to the position of the data at the actual position of the pickup 4. Only when the micro controller 13 has extracted a complete and valid subcode out of a subcode frame it knows exactly where the pickup 4 is located.

From the actual position of the pickup 4 and the value of the verified write counter the micro controller 13 calculates how far the pickup 4 is from the position on the CD where writing to the memory 9 needs to be restarted, in number of subcode frames. This is indicated in Fig. 5, where the new write counter is located at the position of the verified write counter. Data which have been written to the memory 9 after the verified write counter are discarded. The micro controller 13 initialises a counter Nsc, which is preferably located in the memory controller 8, with this value. In the example in Fig. 5 three subcode frames need to be read before the writing to the memory 9 can restart, i.e. Nsc=3.

The micro controller 13 then puts the memory controller 8 into a "seeking" mode, where the memory controller 8 watches for the data sample following the one stored at the position of the verified write counter, in order to restart the write operation.

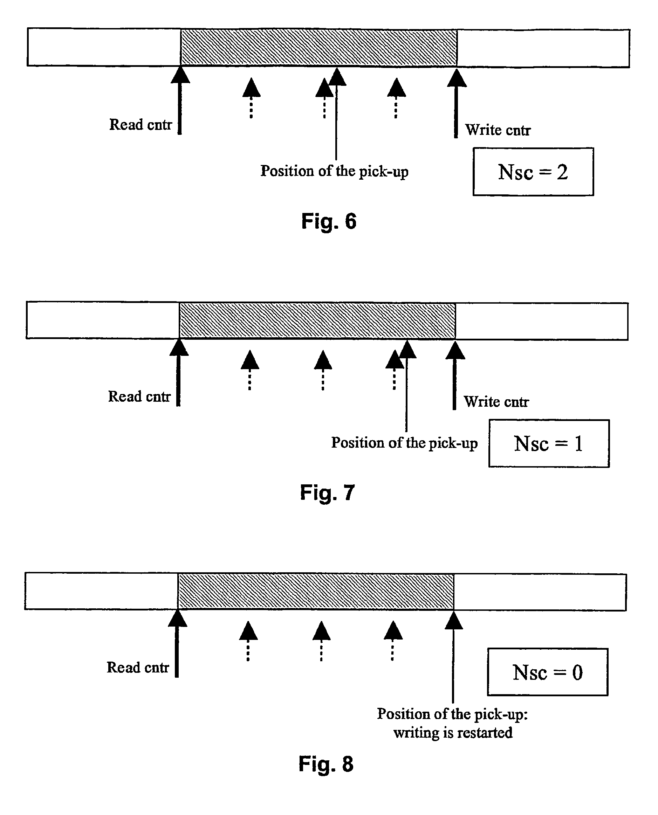

In Figs. 6 and 7 the pickup 4 has moved towards the position of the new write counter, i.e. the verified write counter. Each time a new subcode frame starts, the memory controller 8 decrements Nsc by '1'. The memory controller 8 detects the beginning of a new subcode frame from the occurrence of the S1 signal. For this purpose the rising edge of the S1 signal is used.

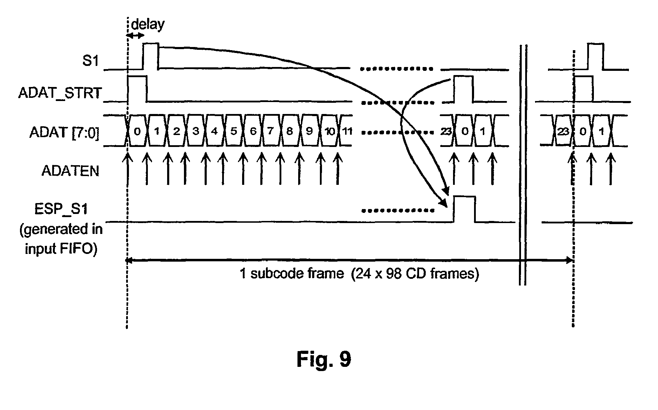

However, for recording media with very poor quality the S1 signal may be corrupted. Either no S1 signal is present at the beginning of a new subcode frame, or there are additional incorrect S1 signals between two valid S1 signals. In order to handle this situation, a lock mechanism is implemented. The lock mechanism is reset and restarted by a command from the micro controller 13. After a reset, the lock mechanism searches for a pair of S1 signals separated by exactly 1176 samples, i.e. a complete subcode frame. For counting the 1176 samples, a ESP_S1 signal is generated by hardware inside an input FIFO by synchronizing the S1 signal with an ADAT_STRT signal. More details to the ESP_S1 signal are given below with reference to Fig. 9. More specifically, the next ADAT_STRT signal following the S1 signal generates the ESP_S1 signal. Once the pair of S1 signals has been found, a START_SCF signal is generated every 1176 samples. The ESP_S1 signal is no longer relevant for a correct operation of the memory controller 8. The START_SCF signal is used for saving the value of the write pointer. Being in 'seeking mode', the ESP_S1 signal is no longer needed for counting down the Nsc counter. Instead, only the samples (ADATEN) are counted. After the completion of 1176 samples, Nsc is decrement by '1'. Preferably the whole lock mechanism is located in the input FIFO.

The lock mechanism needs to be reset after every jump back operation to restart searching for a valid pair of S1 signals. Note that only one valid S1 signal is needed to exactly determine where to restart writing. This valid subcode signal is also needed by the microcontroller 13 to compute the actual position of the pickup 4 after the jump back operation.

If a new shock occurs during seeking operation, the memory controller 8 is put back from seeking mode to "read enabled, write disabled" mode. The operations then starts again as depicted in Fig. 3.

If during write disabled, or seek mode, the read counter reaches the value of the verified write counter, the memory 9 is empty and the micro controller 13 needs to react accordingly, e.g. by generating an interrupt or error signal.

As depicted in Fig. 8, when the memory controller is in seeking mode the position of the incoming data will eventually exactly match the position of the verified write counter. In this case the write operation is restarted and the new data are appended to the previous data in the memory 9 without discontinuity. The memory controller 8 switches itself into the "read enabled, write enabled" mode and no further intervention from the micro controller is needed. The operation has returned to the situation depicted in Fig. 2.

The same lock mechanism is used when compressed audio data are retrieved from a CD and the memory is full. In this case a jump back of the pickup 4 is initiated and a certain amount of data is discarded. When the pickup reaches the verified write counter, part of the data buffered in the memory 9 have already been read and the memory 9 is no longer full.

Fig. 9 explains the generation of the ESP_S1 signal by combining the S1 signal, which indicates a new subcode frame, but which is not synchronous with the samples, and the ADAT_STRT signal, which indicates the start of a new CD frame and is synchronous with the samples. Instead of the S1 signal, it is likewise possible to use the S0 signal for synchronization.

## Claims

1. Method for buffering audio data read from an optical recording medium in a memory (9), the audio data being divided into frames with a determined number of audio samples, wherein in case of an error condition audio data from a previous position on the optical recording medium (1) prior to a position corresponding to a determined verified write position in the memory (9) are read and writing to the memory (9) is inhibited,
**characterized in that** it includes the steps of:
- counting the number of audio samples read from the optical recording medium (1);
- searching for two subsequent markers having a distance equal to the number of audio samples of a frame;
- once the subsequent markers are found, determining the remaining distance to the verified write position based on the number of counted audio samples;
- restarting the writing of audio data to the memory (9) when the audio data read from the optical recording medium (1) correspond to the verified write position.

2. Method according to claim 1, **wherein** the marker is a synchronisation bit (S0, S1) of a subcode frame.

3. Method according to claim 2, wherein the distance to the verified write position is determined in number of subcode frames.

4. Method according to claim 3, wherein a counter (Nsc) is provided for counting down the number of subcode frames remaining to the verified write position.

5. Method according to one of claims 2 to 4, wherein counting the number of audio samples read from the optical recording medium (1) is started by a signal (ADAT_STRT) indicating the start of a new frame.

6. Method according to one of the preceding claims, further including the step of indicating an error status if a read counter (Read cntr) of the memory (9) reaches the verified write position.

7. Method according to one of claims 1 to 6, wherein the error condition is an interruption caused by a shock.

8. Method according to claim 7, **characterized in that** in the event of a further interruption before reaching the verified write position audio data are read from a further previous position on the optical recording medium (1).

9. Method according to one of claims 1 to 6, wherein the error condition is an overflow or an impending overflow of the memory (9).

10. Apparatus for reading from and/or writing to optical recording media, **characterized in that** it is adapted to perform a method according to one of claims 1 to 9 for buffering audio data.

## Patentansprüche

1. Verfahren zum Puffern von aus einem optischen Aufzeichnungsmedium gelesenen Audiodaten in einem Speicher (9), wobei die Audiodaten in Rahmen mit einer bestimmten Anzahl von Audioabtastwerten unterteilt sind, wobei im Fall einer Fehlerbedingung Audiodaten von einer vorherigen Position auf dem optischen Aufzeichnungsmedium (1) vor einer Position, die einer bestimmten verifizierten Schreibposition in dem Speicher (9) entspricht, gelesen werden und das Schreiben in den Speicher (9) gesperrt wird,
**dadurch gekennzeichnet, daß** es die folenden Schritte umfaßt:
- Zählen der Anzahl der aus dem optischen Aufzeichnungsmedium (1) gelesenen Audioabtastwerte;
- Suchen nach zwei nachfolgenden Markierungen mit einer Distanz gleich der Anzahl der Audioabtastwerte eines Rahmens;
- nachdem die nachfolgenden Markierungen gefunden sind, Bestimmen der verbleibenden Distanz zu der verifizierten Schreibposition auf der Basis der Anzahl gezählter Audioabtastwerte;
- Neustarten des Schreibens von Audiodaten in den Speicher (9), wenn die aus dem optischen Aufzeichnungsmedium (1) gelesenen Audiodaten der verifizierten Schreibposition entsprechen.

2. Verfahren nach Anspruch 1, wobei die Markierung ein Synchronisationsbit (S0, S1) eines Subcoderahmens ist.

3. Verfahren nach Anspruch 2, wobei die Distanz zu der verifizierten Schreibposition als Anzahl von Subcoderahmen bestimmt wird.

4. Verfahren nach Anspruch 3, wobei ein Zähler (Nsc) zum Herunterzählen der Anzahl der bis zu der verifizierten Schreibposition verbleibenden Subcoderahmen vorgesehen wird.

5. Verfahren nach einem der Ansprüche 2 bis 4, wobei das Zählen der Anzahl der aus dem optischen Aufzeichnungsmedium (1) gelesenen Audioabtastwerte durch ein Signal (ADAT_STRT) gestartet wird, das den Anfang eines neuen Rahmens anzeigt.

6. Verfahren nach einem der vorhergehenden Ansprüche, ferner mit dem Schritt des Anzeigens eines Fehlerstatus, wenn ein Lesezähler (Read cntr) des Speichers (9) die verifizierte Schreibposition erreicht.

7. Verfahren nach einem der Ansprüche 1 bis 6, wobei die Fehlerbedingung eine durch eine Erschütterung verursachte Unterbrechung ist.

8. Verfahren nach Anspruch 7, **dadurch gekennzeichnet, daß** im Fall einer weiteren Unterbrechung vor dem Erreichen der verifizierten Schreibposition Audiodaten aus einer weiteren vorherigen Position auf dem optischen Aufzeichnungmedium (1) gelesen werden.

9. Verfahren nach einem der Ansprüche 1 bis 6, wobei die Fehlerbedingung ein Überlauf oder ein bevorstehender Überlauf des Speichers (9) ist.

10. Vorrichtung zum Lesen und/oder Beschreiben von optischen Aufzeichnungsmedien, **dadurch gekennzeichnet, daß** sie dafür ausgelegt ist, ein Verfahren nach einem der Ansprüche 1 bis 9 zum Puffern von Audiodaten auszuführen.

## Revendications

1. Procédé de mise en mémoire tampon de données audio lues à partir d'un support d'enregistrement optique dans une mémoire (9), les données audio étant divisées en trames comportant un nombre déterminé d'échantillons audio, où, dans le cas d'une condition d'erreur, des données audio à une position précédente sur le support d'enregistrement optique (1) avant une position correspondant à une position d'écriture vérifiée déterminée dans la mémoire (9) sont lues et une écriture dans la mémoire (9) est inhibée,
**caractérisé en ce qu'**il comprend les étapes suivantes :
- compter le nombre d'échantillons audio lus à partir du support d'enregistrement optique (1) ;
- rechercher deux marqueurs successifs comportant une distance égale au nombre d'échantillons audio d'une trame ;
- une fois que les marqueurs successifs sont trouvés, déterminer la distance restante jusqu'à la position d'écriture vérifiée en se basant sur le nombre d'échantillons audio comptés ;
- redémarrer l'écriture des données audio sur la mémoire (9) lorsque les données audio lues à partir du support d'enregistrement optique (1) correspondent à la position d'écriture vérifiée.

2. Procédé selon la revendication 1, où le marqueur est un octet de synchronisation (S0,S1) d'une trame de sous-codes.

3. Procédé selon la revendication 2, où la distance jusqu'à la position d'écriture vérifiée est déterminée en nombre de trames de sous-codes.

4. Procédé selon la revendication 3, où un compteur (Nsc) est fourni pour compter le nombre de trames de sous-codes restant à la position d'écriture vérifiée.

5. Procédé selon une des revendications 2 à 4, où le comptage du nombre d'échantillons audio lus à partir du support d'enregistrement optique (1) est déclenché par un signal (ADAT_STRT) indiquant le début d'une nouvelle trame.

6. Procédé selon une des revendications précédentes, incluant en outre l'étape d'indication d'un statut d'erreur si un compteur de lecture (Read cntr) de la mémoire (9) atteint la position d'écriture vérifiée.

7. Procédé selon une des revendications 1 à 6, où la condition d'erreur est une interruption provoquée par un choc.

8. Procédé selon la revendication 7, **caractérisé en ce que** dans le cas d'une autre interruption avant d'atteindre la position d'écriture vérifiée, les données audio sont lues à partir d'une autre position précédente sur le support d'enregistrement optique (1).

9. Procédé selon une des revendications 1 à 6, où la condition d'erreur est un dépassement de capacité ou un dépassement de capacité imminent de la mémoire (9).

10. Appareil de lecture et/ou d'écriture sur des supports d'enregistrement optique, **caractérisé en ce qu'**il est adapté pour exécuter un procédé selon une des revendications 1 à 9 pour mettre en mémoire tampon des données audio.
